# EUROPÄISCHE PATENTSCHRIFT

(11) **EP 2 660 131 B1**
(45) Veröffentlichungstag und Bekanntmachung des Hinweises auf die Patenterteilung: **26.11.2014**
(21) Anmeldenummer: 13160292.2
(22) Anmeldetag: 21.03.2013
(51) Int. Cl.: B62D 61/12, B62D 63/06, B62D 53/00, B62B 3/06

(54) **Transporteinheit für werksinterne Routenzüge**
Transport unit for a works-internal trailer train
Unité de transport d'un train à remorque pour l'intérieur d'un atelier

(30) Priorität: 03.05.2012 DE 202012101625 U
(43) Veröffentlichungstag der Anmeldung: 06.11.2013
(73) Patentinhaber: LR Intralogistik GmbH, 84109 Wörth a. d. Isar (DE)
(72) Erfinder: Berghammer, Fritz, 84036 Landshut (DE)
(74) Vertreter: Gustorf, Gerhard

(56) Entgegenhaltungen:
- EP-A1- 1 352 815
- DE-A1- 1 480 602
- DE-A1-102008 060 962
- DE-U1-202009 001 933
- FR-A1- 2 850 096
- US-A- 3 223 434

## Beschreibung

Die Erfindung betrifft eine Transporteinheit für werksinteme Routenzüge nach dem Oberbegriff des Anspruchs 1.

Aus DE 20 2009 001 933 U1 ist ein Trailerzuganhänger mit einem C-förmigen Tragrahmen bekannt, der zur Aufnahme eines Transportgutwagens in die Ladeöffnung weisende Hubzinken hat. Der Tragrahmen selbst ist über Huborgane an einem vorderen und einem hinteren Fahrwerk abgestützt.

In DE 10 2008 060 962 A1 ist ein Trailerzuganhänger beschrieben und dargestellt, der einen in Draufsicht E-förmigen Tragrahmen hat, dessen mittlerer Querträger über eine Hubeinrichtung mit einem Fahrgestell verbunden ist. Durch die seitliche Ladeöffnung des Anhängers kann ein Innenfahrzeug eingeschoben werden, das die Last trägt und mit Lenkrollen bestückt ist.

Der Erfindung liegt die Aufgabe zugrunde, eine Transporteinheit zur Verfügung zu stellen, die gegenüber dem Stand der Technik einen konstruktiv einfacheren Aufbau hinsichtlich des Innenfahrzeuges und der Hubeinrichtung aufweist.

Zur Lösung dieser Aufgabe ist bei der Transporteinheit der angegebenen Gattung erfindungsgemäß vorgesehen, dass das Innenfahrzeug aus einem Gabelhubwagen mit einer mittels einer Deichsel und eines Drehgestells um eine Hochachse schwenkbaren Lenkrolle besteht, der einer am Längsträger des Tragrahmens gelagertes Rad gegenüberliegt.

Aus der EP 2 223 846 A1 ist auch ein Trailerzuganhänger mit einem C-förmigen Tragrahmen und ein Transporteinheit nach dem Oberbegriff des Anspruchs 1 offenbart.

Der Vorteil dieser Transporteinheit besteht vor allem darin, dass der Trailerzuganhänger nach dem Einschieben des Gabelhubwagens für den Fahrbetrieb eine Einheit mit dem Gabelhubwagen bildet. Da handelsübliche Gabelhubwagen bereits mit einem Huborgan ausgerüstet sind, das mittels der Deichsel betätigt wird, entfällt die Notwendigkeit, den Tragrahmen mit einer eigenen Hubeinrichtung zu bestücken. Nach dem Einschieben des Gabelhubwagens in den Trailerzuganhänger bildet die schwenkbare Lenkrolle des Gabelhubwagens mit dem am Längsträger des Tragrahmens gelagerten Rad das für den Fahrbetrieb erforderliche Fahrwerk.

Mit der Erfindung steht somit die Möglichkeit zur Verfügung, ohne zusätzlichen Aufwand und ohne ein weiteres Gerät die Last sowohl zu manipulieren als auch zu transportieren. Bei der Last handelt es sich überwiegend um Paletten oder Gitterboxen.

In Weiterbildung der Erfindung hat der Längsträger zu beiden Seiten des Rades je einen Sitz zum Fixieren der beiden Arme des Gabelhubwagens. Diese können über die am Armende vorgesehenen Stützrollen in den Sitz geschoben werden, wo sie sich so abstützen, dass sie im Fahrbetrieb nicht auf den Boden abrollen.

Nach einem weiteren Merkmal der Erfindung hat der Tragrahmen Stützräder. Diese können an den freien Enden der beiden Querträger gelagert sein; alternativ oder zusätzlich ist ein Stützrad an einer von einem der Querträger abstehenden, horizontal starren Deichsel des Rahmens gelagert, die zur Kupplung des Rahmens mit dem Rahmen eines weiteren Trailerzuganhängers dient.

Nach einem weiteren Merkmal der Erfindung kann das Drehgestell mit seiner Lenkrolle in Fahrtrichtung des gegenüberliegenden Rades verriegelt werden.

Die Erfindung ist nachstehend an einem Ausführungsbeispiel erläutert, das in der Zeichnung dargestellt ist. Es zeigen:
- Figur 1: die Ansicht von zwei miteinander gekoppelten Trailerzuganhängern vor dem Einschieben der jeweils eine Palette tragenden Gabelhubwagen,
- Figur 2: die in Figur 1 gezeigten Transporteinheiten nach dem Einschieben der beiden Gabelhubwagen,
- Figur 3: die Transporteinheiten im Fahrbetrieb,
- Figur 4: die Rückansicht der Transporteinheiten in der Stellung der Figur 2 und
- Figur 5: eine Draufsicht auf die beiden Transporteinheiten in der Stellung der Figuren 2 und 4.

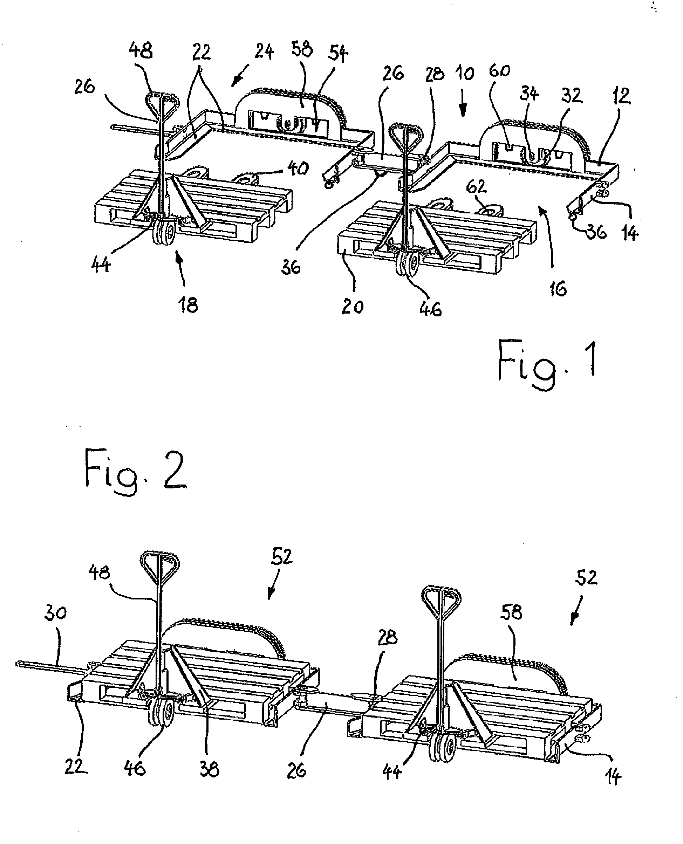

Figur 1 zeigt in Schrägansicht zwei Tragrahmen 10, die in Draufsicht C-förmig ausgebildet sind. Jeder Tragrahmen 10 hat einen seitlichen Längsträger 12, von dessen Enden zwei parallele Querträger 14 rechtwinklig abstehen. Dadurch wird auf der dem Längsträger 12 gegenüberliegenden Seite eine Ladeöffnung 16 gebildet, durch die hindurch mittels eines Gabelhubwagens 18 eine Last, hier in Form einer Palette 20, eingeschoben werden kann. Wie Figur 2 zeigt, stützt sich im eingeschobenen Zustand die Palette 20 auf horizontalen Leisten 22 ab, die vom Längsträger 12 und den beiden Querträgern 14 nach innen abstehen.

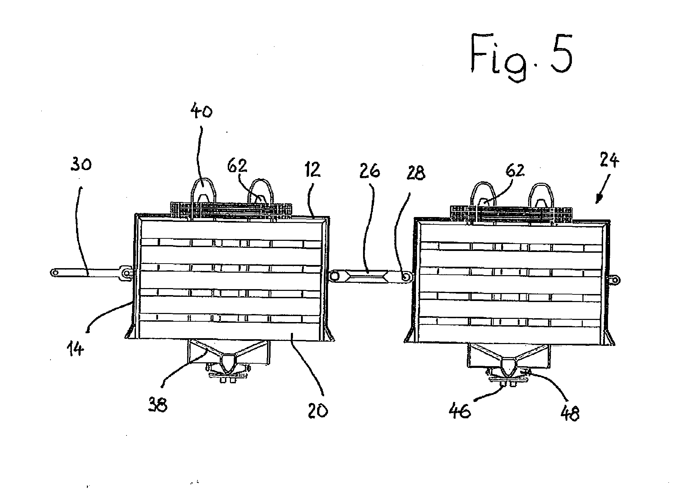

Die beiden durch die Tragrahmen 14 gebildeten Trailerzuganhänger 24 sind über eine in horizontaler Richtung starre Deichsel 26 miteinander gekoppelt, die an dem jeweiligen Querträger 14 über ein Drehgelenk 28 mit vertikaler Achse angelenkt ist. Der in den Figuren 1 bis 3 sowie 5 linke Trailerzuganhänger 24 kann über eine Zugdeichsel 30 an ein nicht dargestelltes Zugfahrzeug eines Routenzuges angehängt werden.

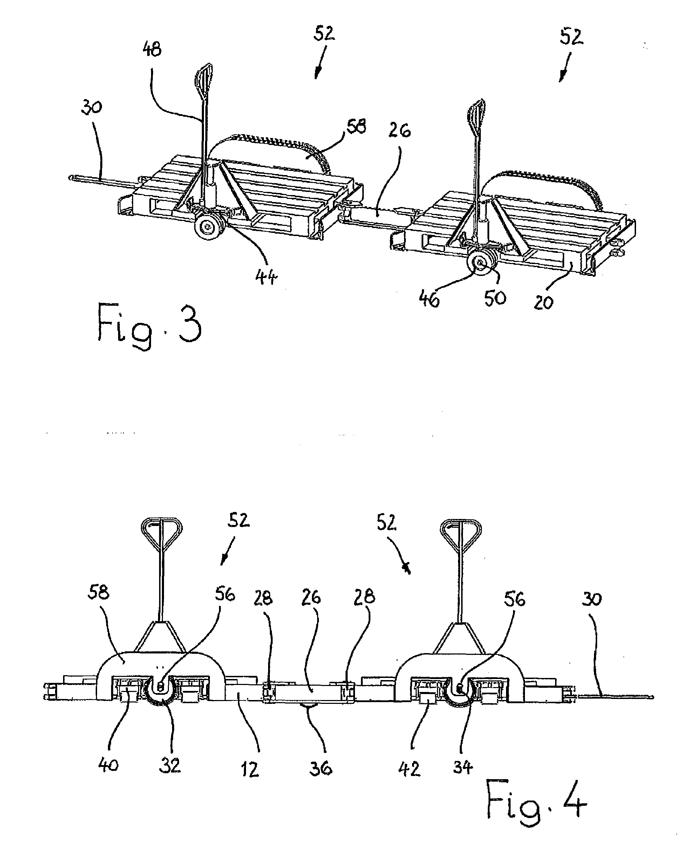

In der Mitte jedes Längsträgers 12 ist ein Rad 32 mit einer zu den beiden Querträgern 14 parallelen Achse 34 gelagert, die in einem vertikalen Langloch 56 höhenverschieblich aufgenommen ist. Wie die Figuren 1 und 4 zeigen, ist das Langloch 56 in eine mit dem Längsträger 12 verbundene Wand 58 eingearbeitet, die sich über den mittleren Bereich des Längsträgers 12 erstreckt und höher als dieser ist. Während des Beladens befindet sich die Achse 34 des Rades 32 innerhalb des Langlochs 56 in ihrer oberen Position, so dass der untere Rand des Längsträgers 12 auf der Fahrbahn aufliegt.

Zur Abstützung während des Beladens sind am Tragrahmen 10 Stützräder 36 vorgesehen, die an den freien Enden der beiden Querträger 14 gelagert sind. Zusätzlich oder alternativ kann an der Deichsel 26 ein Stützrad 36 vorgesehen sein.

Der Gabelhubwagen 18 hat in an sich bekannter Weise ein Traggestell 38, von dem zwei parallele Arme 40 horizontal abstehen. An jedem Ende der beiden Arme 40 ist eine Stützrolle 42 angebracht. Das Traggestell 38 hat ein um eine Hochachse schwenkbares Drehgestell 44, das eine Doppellenkrolle 46 trägt. Über eine Deichsel 48 kann die Doppellenkrolle 46 aus der in den Figuren 1 und 2 gezeigten Be- und Entladeposition um 90° in die in Figur 3 gezeigte Fahrposition geschwenkt werden, in der die Achse 50 der Doppellenkrolle 46 koaxial zu der Achse 34 des gegenüberliegenden Rades 32 verläuft.

Durch eine nicht weiter dargestellte Vorrichtung lässt sich das Drehgestell 44 in Fahrtrichtung der Doppellenkrolle 46 (Figur 3) verriegeln.

Beim Einschieben des Gabelhubwagens 18 in den Tragrahmen 10 des Trailerzuganhängers 24 überfahren die Stützrollen 42 der Arme 40 die horizontale Leiste 22 des Längsträgers 12, so dass die freien Enden der Arme 40 dann in jeweils einen rechteckigen Sitz 54 ein, der zu beiden Seiten des Rades 32 in die Wand 58 des Längsträgers 12 als Ausnehmung eingearbeitet ist. In Figur 1 ist angedeutet, dass vom oberen Rand jeder Ausnehmung ein Finger 60 nach unten absteht, der im eingeschobenen Zustand des Gabelhubwagens 18 vertikal über einer entsprechenden Rastaussparung 62 liegt, die in das freie Ende jedes Armes 40 eingearbeitet ist.

Zum Einschieben des Gabelhubwagens 18 in den Tragrahmen 10 wird in bekannter Weise durch mehrmalige Pumpbewegung der Deichsel 26 mittels des integrierten Huborgans das Traggestell 38 mit den beiden Armen 40 angehoben. Nachdem die freien Enden der beiden Arme 40 in die Sitze 54 eingreifen, werden durch nochmalige Pumpbewegung die Arme 40 um weitere 3 bis 4 cm angehoben, bis diese an der Oberkante der Sitze 54 anliegen und die Finger 60 in die Rastaussparungen 62 eingreifen. Auf diese Weise ist der Gabelhubwagen 18 in dem Tragrahmen 10 verriegelt, und die Stützrollen 42 der beiden Arme 40 befinden sich oberhalb der Fahrbahn, auf der sie nun nicht mehr abrollen können.

Durch ein nicht weiter dargestelltes, an der Wand 58 des Längsträgers 12 angebrachtes Druckorgan, beispielsweise ein bogenförmiges Stahlteil, wird in dieser Stellung die Achse 34 des jeweiligen Stützrades 36 im Langloch 56 nach unten gedrückt, so dass das Stützrad 36 zum Abrollen in Bodenkontakt gehalten wird.

Nachdem die Deichsel 48 jedes Trailerzuganhängers 24 um 90° um die Hochachse in die Fahrstellung der Figur 3 gedreht wurde, verlaufen die Lenkrollen 46 parallel zu den gegenüberliegenden Rädern 32. Der Gabelhubwagen 18 bildet dann mit dem Trailerzuganhänger 24 eine Transporteinheit 52, die auf dem Rad 32 des Tragrahmens 10 und auf der Doppellenkrolle 46 des Gabelhubwagens 18 abrollt.

## Patentansprüche

1. Transporteinheit für werksinterne Routenzüge mit wenigstens einem rollengeführten Trailerzuganhänger (24), der zur Aufnahme einer Last (20) einen in Draufsicht C-förmigen Tragrahmen (10) hat, der aus zwei parallelen Querträgern (14) und einem diese verbindenden, seitlichen Längsträger (12) besteht, dem eine seitliche Ladeöffnung (16) zum Ein- und Ausschieben eines die Last (20) tragenden, im Trailerzug mitgeführten Innenfahrzeugs gegenüberliegt, **dadurch gekennzeichnet, dass** das Innenfahrzeug aus einem Gabelhubwagen (18) mit einer mittels einer Deichsel (48) und eines Drehgestells (44) um eine Hochachse schwenkbaren Lenkrolle (46) besteht, der eine am Längsträger (12) des Tragrahmens (10) gelagertes Rad (32) gegenüberliegt.

2. Transporteinheit nach Anspruch 1, **dadurch gekennzeichnet, dass** der Längsträger (12) zu beiden Seiten des Rades (32) je einen Sitz (54) zum Fixieren der beiden je eine Stützrolle (42) tragenden Arme (40) des Gabelhubwagens (18) hat.

3. Transporteinheit nach Anspruch 2, **dadurch gekennzeichnet, dass** der Sitz (54) als Aussparung in einer mit dem Längsträger (12) verbundenen Wand (58) ausgebildet ist, wobei von der Oberkante der Aussparung ein Finger (60) für den Eingriff in eine Rastaussparung (62) am freien Ende des jeweiligen Armes (40) nach unten absteht.

4. Transporteinheit nach einem der vorhergehenden Ansprüche, **dadurch gekennzeichnet, dass** das Rad (32) mit seiner Achse (34) in einem vertikalen Langloch (56) des Längsträger (12) höhenverschieblich gelagert ist.

5. Transporteinheit nach Anspruch 4, **dadurch gekennzeichnet, dass** der Achse (34) ein das Rad (32) in Bodenkontakt bringendes Druckorgan zugeordnet ist.

6. Transporteinheit nach einem der vorhergehenden Ansprüche, **dadurch gekennzeichnet, dass** der Tragrahmen (10) Stützräder (36) hat.

7. Transporteinheit nach Anspruch 6, **dadurch gekennzeichnet, dass** an den freien Enden der beiden Querträger (14) je ein Stützrad (36) gelagert ist.

8. Transporteinheit nach Anspruch 6, **dadurch gekennzeichnet, dass** ein Stützrad (36) an einer von einem der Querträger (14) abstehenden, horizontal starren Deichsel (26) zur Kupplung des Rahmens (10) mit dem Rahmen (10) eines weiteren Trailerzuganhängers (24) gelagert ist.

9. Transporteinheit nach einem der vorhergehenden Ansprüche, **dadurch gekennzeichnet, dass** das Drehgestell (44) mit seiner Lenkrolle (46) in Fahrtrichtung des gegenüberliegenden Rades (32) verriegelbar ist.

## Claims

1. Transport unit for trailer trains travelling in a factory and comprising at least one trailer (24) running on rolls and having in top view a C-shaped load carrying frame (10) made up of two parallel crossmembers (14) connected by a lateral longitudinal beam (12) on the opposite side of which a lateral receiving aperture (16) is provided through which a load (20) carrying inner carriage transported inside of said trailer train may be inserted and whithdrawn, **characterized in that** said inner carriage is made up of a forklifter (18) having a castor wheel (46) adapted to be turned through a vertical swivelling axis on a bogie (44) by a drawbar (48) on the opposite side of which a wheel (32) is mounted on the longitudinal beam (12) of said frame (10).

2. Transport unit according to claim 1 wherein said longitudinal beam (12) is provided on both sides of said wheel (32) with a seat (54) for locating both arms (40) of said forklifter (18) each of which is carrying a supporting roller (42).

3. Transport unit according to claim 2 wherein said seat (54) is made of a recess formed in a wall (58) of said longitudinal beam (12), from the upper edge of the recess a finger (60) is protruding downward adapted to engage a notch (62) provided in the free end of the corresponding arm (40).

4. Transport unit according to any of the preceding claims, wherein the axis (34) of said wheel (32) is vertically movable mounted in a vertical slot (56) of said longitudinal beam (12).

5. Transport unit according to claim 4, wherein said axis (34) is provided with a pressure element adapted to push said wheel (32) against the floor.

6. Transport unit according to any of the preceding claims, wherein said frame (10) is provided with supporting rollers (36).

7. Transport unit according to claim 6, wherein a supporting roller (36) is mounted on each free end of both crossmembers (14).

8. Transport unit according to claim 6, wherein a supporting roller (36) is mounted on a rigid horizontal drawbar (26) protruding from one of said crossmembers (14), said rigid drawbar (26) being adapted to couple the frame (10) with the frame (10) of a subsequent trailer (24).

9. Transport unit according to any of the preceding claims, wherein said bogie (44) is adapted to be locked such that the castor wheel (46) is running in the direction of the opposite wheel (32).

## Revendications

1. Unité de transport pour un train de convoyage dans des usines comprenant au moins un remorque de ferroutage (24) sur roues muni d'un cadre (10) destiné à porter une charge (20) et ayant un châssis (10) en forme de C en élévation qui se compose de deux traverses parallèles (14) reliées par un longeron latéral (12) à l'opposé duquel se trouve une ouverture de chargement (16) pour recevoir et décharger un chariot intérieur portant la charge (20) et apte à être transporté dans le train de convoyage, **caractérisée par le fait que** le chariot intérieur est un chariot élévateur à fourche (18) muni d'une roulette (46) pivotante sur un axe vertical au moyen d'un bogie (44) muni d'un timon (48) à l'opposé desquels est positionnée une roue (32) montée sur le longeron (12) du cadre (20).

2. Unité de transport selon la revendication 1 **caractérisée par le fait que** le longeron (12) présente sur les deux côtés de la roue (32) un logement (54) apte à recevoir les deux bras (40) du chariot élévateur à fourche (18) chacun étant muni d'un rouleau d'appui (42).

3. Unité de transport selon la revendication 2, **caractérisée par le fait que** le logement (54) a la forme d'un évidement pratiqué dans une paroi (58) reliée au longeron (12), tandis que sur l'arête supérieure de l'évidement est prévu un doigt (60), orienté vers le bas, encliquetable dans une encoche (62) pratiquée dans l'extremité libre de chaque bras (40).

4. Unité de transport selon une des revendications précédentes, **caractérisée par le fait que** la roue (32) avec son axe (34) est logée verticalement déplaçable dans un trou oblong vertical (56) du longeron (12).

5. Unité de transport selon la revendication 4, **caractérisée par le fait qu'** à l'axe (34) est associé un élément de pression apte à mettre la roue (32) en contact avec le sol.

6. Unité de transport selon une des revendications précédentes, **caractérisée par le fait que** le cadre (10) est muni de roues d'appui (36).

7. Unité de transport selon la revendication 6, **caractérisée par le fait qu'**une roue d'appui (36) est montée sur chaque extrémité des deux traverses (14).

8. Unité de transport selon la revendication 6, **caractérisée par le fait qu'**une roue d'appui (36) est montée sur un timon (26) horizontalement rigide et saillant d'une des traverses (14) aptes à coupler le chassis (100) au chassis (10) d'une remorque (24) suivante.

9. Unité de transport selon une des revendications précédentes, **caractérisée par le fait que** le bogie (44) et sa roulette pivotante (46) est apte à être bloqué dans la direction de marche de la roue opposée (32).
